# DEMANDE DE BREVET EUROPEEN

(11) **EP 4 011 853 A1**
(43) Date de publication de la demande: **15.06.2022**
(21) Numéro de dépôt: 21213199.9
(22) Date de dépôt: 08.12.2021
(51) Int. Cl.: C04B 41/65

(54) **PROCÉDÉ DE TRAITEMENT D'UNE SURFACE COMPRENANT L APPLICATION D'UN LIANT GÉOPOLYMÈRE ET D'UNE COMPOSITION PARTICULIÈRE**

(30) Priorité: 09.12.2020 FR 2012933
(71) Demandeur: Societe Parisienne de Produits et Materiaux, 75016 Paris (FR)
(72) Inventeur: CHAMPET, SIMON, 91220 BRETIGNY SUR ORGE (FR)
(74) Mandataire: Casalonga

(57) **Abrégé**

La présente invention concerne un procédé de traitement d'une surface comprenant les étapes successives suivantes :
a) appliquer sur ladite surface au moins une composition comprenant au moins un liant géopolymère comprenant un ou plusieurs composés aluminosilicate et un ou plusieurs composés alcalins de manière à ce que la surface soit recouverte, au moins partiellement, de préférence totalement, d'une couche de liant géopolymère ;
b) appliquer sur la couche de liant géopolymère au moins une composition A choisie parmi :
- une composition contenant de l'eau et au moins un composé choisi parmi l'argile et la silice ;
- une composition contenant de l'huile et éventuellement de l'argile, de préférence une composition contenant de l'huile et de l'argile ; et
- une composition comprenant au moins un polymère,

de manière à ce que la couche de liant géopolymère soit recouverte, au moins partiellement, de préférence totalement, d'une couche de cure comprenant au moins la composition A.

## Description

La présente invention concerne un procédé de traitement d'une surface comprenant l'application successive d'au moins une composition comprenant au moins un liant géopolymère et d'au moins une composition particulière.

Les liants géopolymères, ou plus simplement les géopolymères, matériaux aluminosilicatés, attirent de plus en plus l'intérêt des scientifiques et industriels. Les propriétés nombreuses et particulières ainsi qu'une production plus respectueuse de l'environnement que les matériaux à base de ciment, notamment les ciments Portland, expliquent cet intérêt grandissant, y compris pour les acteurs du bâtiment et du génie civil.

Dans le domaine du BTP (Bâtiments et Travaux Publics), les liants géopolymères doivent répondre à un grand nombre de contraintes techniques dont la résistance à la compression et la durabilité pour une application structurelle par exemple. Des formulations ont ainsi été développées et testées. Une large utilisation des liants géopolymères dans l'industrie du BTP est cependant limitée par sa fissuration par retrait hydraulique.

En effet, les liants géopolymères présentent un retrait hydraulique conséquent, pouvant entraîner la fissuration de ce dernier, ce qui n'est pas compatible avec la recherche et l'obtention d'une solution durable et par exemple d'un revêtement d'étanchéité dans le BTP.

Ce retrait hydraulique est bien connu de l'homme du métier pour notamment les matériaux à base de ciment Portland, par exemple le béton, les mortiers classiques, etc. Ce retrait hydraulique est principalement attribué au volume que laisse l'eau libre qui s'extrait des capillaires des matériaux lors de son séchage (prise/cure).

Deux raisons principales peuvent expliquer cette extraction d'eau libre. La première raison est liée à l'évaporation simple de cette eau du matériau dans l'air ambiant. La seconde raison est liée au support qui absorbe cette eau libre. Le volume laissé par l'eau libre crée des contraintes, appelées forces capillaires. Des fissures se créent alors (et s'ouvrent) lorsque les efforts de traction créés dans le liant frais (c'est-à-dire avant la prise totale) par les forces capillaires dépassent la résistance à la traction de ce dernier.

Pour faire face à ces problématiques, de nombreux produits appelés « anti-retrait » ou « de cure » sont disponibles sur le marché pour contrer ce retrait hydraulique (et d'autres types de retraits) sur les matériaux à base de ciment Portland. Cependant, aucun de ces produits ne semble lutter efficacement contre la fissuration des liants géopolymères sur support rigide, par exemple sur une surface en béton.

La différence de comportement entre un matériau à base de ciment Portland et un liant géopolymère peut être liée à la différence de leur chimie et les conditions alcalines potentiellement différentes. En effet, alors que l'eau intègre la structure finale des matériaux à base de ciment Portland lors des réactions d'hydratation, une partie de l'eau injectée au début restant chimiquement liée au matériau, l'eau injectée dans les réactions géopolymériques est "libérée" à la fin des réactions de polycondensation. Il y a donc, en plus d'une chimie différente (et cinétique associée), une quantité d'eau libre plus importante que pour un matériau à base de ciment Portland.

Il existe donc un besoin de développer des solutions spécifiques aux liants géopolymères afin de faire face à la problématique liée au retrait hydraulique.

A l'échelle laboratoire, une solution envisageable est de confiner les liants géopolymères pendant leur prise afin de conserver l'humidité relative élevée. Cette solution permet de ralentir la sortie de l'eau libre afin de stabiliser la matrice durcie après prise. La résistance aux contraintes capillaires est alors accrue. Différentes techniques de confinement peuvent être citées. Par exemple, il est possible d'envelopper le matériau dans un plastique imperméable de type polyane, ou encore d'immerger le matériau dans une cuve d'eau, ou encore d'enfermer le matériau dans une boîte imperméable de faible volume libre.

Cependant, ces différentes solutions ne sont, de toute évidence, pas transposables et applicables à grande échelle, c'est-à-dire directement sur les sites de chantier, tout en respectant les cadences de travail et les aspects financiers.

Ainsi, il existe un réel besoin de développer un procédé de traitement d'une surface qui permette de surmonter les inconvénients cités ci-avant, en particulier de faire face à la problématique liée au retrait hydraulique conséquent dû à la présence de liants géopolymères, tout en respectant une mise en œuvre sur chantier acceptable. Le procédé doit notamment permettre de protéger le liant géopolymère pendant sa prise.

La présente invention a donc pour objet un procédé de traitement d'une surface comprenant les étapes successives suivantes :
a) appliquer sur ladite surface au moins une composition comprenant au moins un liant géopolymère comprenant un ou plusieurs composés aluminosilicate et un ou plusieurs composés alcalins de manière à ce que la surface soit recouverte, au moins partiellement, de préférence totalement, d'une couche de liant géopolymère ;
b) appliquer sur la couche de liant géopolymère au moins une composition A choisie parmi :
   - une composition contenant de l'eau et au moins un composé choisi parmi l'argile et la silice ;
   - une composition contenant de l'huile et éventuellement de l'argile, de préférence une composition contenant de l'huile et de l'argile ; et
   - une composition comprenant au moins un polymère,
de manière à ce que la couche de liant géopolymère soit recouverte, au moins partiellement, de préférence totalement, d'une couche de cure comprenant au moins ladite composition A.

Le procédé selon l'invention permet de traiter une surface en faisant face à la problématique liée au retrait hydraulique conséquent dû à la présence de liants géopolymères. Dans le même temps, la mise en œuvre sur chantier doit être acceptable, c'est-à-dire que le triptyque coût/délai/qualité doit présenter le meilleur compromis possible.

On entend par « traitement d'une surface » au sens de la présente toute opération appliquée sur ladite surface de toute matière.

Ainsi, le procédé de traitement d'une surface peut être par exemple un procédé de réparation, de renforcement ou d'étanchéification d'une surface, etc. Il peut également consister en une application d'un revêtement sur ladite surface.

D'autres objets, caractéristiques, aspects et avantages de l'invention apparaîtront encore plus clairement à la lecture de la description et des dessins annexés sur lesquels :
[Fig 1] est une photographie d'un échantillon obtenu à l'issue d'un procédé de traitement comparatif ;
[Fig 2] est une photographie d'un échantillon obtenu à l'issue d'un procédé de traitement comparatif ;
[Fig 3] est une photographie d'un échantillon obtenu à l'issue d'un procédé de traitement comparatif ;
[Fig 4] est une photographie d'un échantillon obtenu à l'issue d'un procédé de traitement selon l'invention ;
[Fig 5] est une photographie d'un échantillon obtenu à l'issue d'un procédé de traitement selon l'invention.

Dans ce qui va suivre, et à moins d'une autre indication, les bornes d'un domaine de valeurs sont comprises dans ce domaine, notamment dans les expressions « compris entre » et « allant de ... à ...».

Par ailleurs, l'expression « au moins un » utilisée dans la présente description est équivalente à l'expression « un ou plusieurs ».

Comme indiqué précédemment, le procédé selon l'invention est un procédé de traitement d'une surface comprenant l'étape a) d'application sur ladite surface d'au moins une composition comprenant au moins un liant géopolymère comprenant un ou plusieurs composés aluminosilicate et un ou plusieurs composés alcalins de manière à ce que la surface soit recouverte, au moins partiellement, de préférence totalement, d'une couche de liant géopolymère.

De préférence, ladite surface est une surface en béton.

Selon la présente invention, un liant géopolymère est mis en œuvre. Un liant géopolymère (ou géopolymère) est un polymère minéral avec une structure aluminosilicatée ayant une microstructure amorphe aux rayons X à température ambiante.

Le liant géopolymère mis en œuvre dans l'invention comprend un ou plusieurs composés aluminosilicate et un ou plusieurs composés alcalins.

Il peut être synthétisé à partir de la réaction entre une source alumino-silicatée telle que, par exemple, du métakaolin (ou autre argile), des cendres volantes, du laitier, ou un mélange de sources alumino-silicatées avec une solution silicatée en milieu alcalin ou acide, qui est par exemple une solution de silicate de potassium (ou de silicate de sodium) comprenant éventuellement de l'hydroxyde de potassium (ou respectivement de l'hydroxyde de sodium).

Un liant géopolymère peut être décrit par des rapports molaires des éléments qui le composent.

Avantageusement, le(s)dit(s) composé(s) aluminosilicate et le(s)dit(s) composé(s) alcalins, présents dans le liant géopolymère, sont selon des rapports molaires à l'état frais :
Si/Al compris entre 0,5 et 5, de préférence entre 1 et 4,
M/Al inférieur ou égal à 5, de préférence inférieur ou égal à 2, où M représente un atome de sodium (Na) ou un atome de potassium (K), et H₂O/M₂O inférieur ou égal à 25, de préférence compris entre 8 et 20, où M représente Na ou K.

L'état frais du géopolymère peut être défini comme l'état du géopolymère au moment de sa synthèse, c'est-à-dire avant la prise du matériau et l'évaporation de l'eau.

Selon un mode de réalisation particulier, l'étape a) est réalisée par projection, par exemple à l'aide d'un pistolet.

De manière classique, un mortier géopolymère comprenant un liant géopolymère peut être préparé.

De préférence, ledit mortier géopolymère comprend des charges, telles que de la silice cristalline, des billes de verre, du quartz, des agrégats, etc.

Comme indiqué précédemment, l'étape a) du procédé selon l'invention est suivie de l'étape b) d'application sur la couche de liant géopolymère d'au moins une composition A choisie parmi :
- une composition contenant de l'eau et au moins un composé choisi parmi l'argile et la silice ;
- une composition contenant de l'huile et éventuellement de l'argile, de préférence une composition contenant de l'huile et de l'argile ; et
- une composition comprenant au moins un polymère,
de manière à ce que la couche de liant géopolymère soit recouverte, au moins partiellement, de préférence totalement, d'une couche de cure comprenant au moins la composition A.

Selon un mode de réalisation particulier, il peut y avoir un temps de pose entre l'étape a) et l'étape b). Ce temps de pose peut varier de 5 minutes à plusieurs heures, de préférence de 10 minutes à 1 heure.

Selon un autre mode de réalisation particulier, l'étape b) est réalisée immédiatement après l'étape a), c'est-à-dire que les étapes a) et b) s'enchaînent, sans temps de pose. Dans ce mode de réalisation, on dit alors que la composition A selon l'invention est appliquée sur la couche de liant géopolymère « frais sur frais ».

Avantageusement, lorsque la composition A est choisie parmi une composition contenant de l'eau et au moins un composé choisi parmi l'argile et la silice et une composition comprenant au moins un polymère, elle peut se présenter sous la forme d'un gel aqueux.

On entend par « composition sous forme de gel aqueux », au sens de la présente invention, une composition comprenant de l'eau et qui se présente sous la forme d'un gel, c'est-à-dire une forme galénique semi-solide contenant un agent gélifiant pour donner de la rigidité à une solution ou à une dispersion colloïdale.

De préférence, la composition A se présentant sous la forme d'un gel aqueux est une composition dont la viscosité peut aller de 1 mPa.s à 1 kPa.s, de préférence de 400 mPa.s à 500 Pa.s (à une température de 20°C et à pression atmosphérique).

La viscosité d'une composition sous forme de gel aqueux peut être déterminée au moyen d'un viscosimètre, par exemple le viscosimètre Brookfield LV.

De préférence, la composition A est choisie parmi une composition contenant de l'eau et au moins un composé choisi parmi l'argile et la silice, et une composition contenant de l'huile et de l'argile.

L'argile peut être choisie parmi la kaolinite, le métakaolin, la dickite, la nacrite, la halloysite, la montmorillonite, la bentonite, la vermiculite et leurs mélanges.

L'huile peut être tout type d'huile connue de l'homme du métier. On peut citer en particulier les huiles végétales, synthétiques,

La silice peut être tout type de silice absorbante connu de l'homme du métier. A titre d'exemples de silice absorbante, on peut citer notamment la silice fine ou la silice pyrogénée.

De manière préférée, la silice est choisie parmi la silice pyrogénée. La silice pyrogénée peut se présenter sous la forme de particules ayant un diamètre moyen allant de 2 à 500 nm, une surface spécifique moyenne allant de 20 à 1000 m²/g et une masse volumique moyenne allant de 0,1 à 100 g/cm³, de préférence de 0,1 à 20 g/cm³.

On peut citer en particulier la silice pyrogénée HDK^{®} N20 commercialisée par la société Wacker.

Parmi les compositions comprenant au moins un polymère, on peut en particulier citer « Polyasim Y » commercialisée par la société Polyasim ou encore les produits de la gamme « SprayPlast ».

De manière préférée, lorsque la composition A est une composition contenant de l'eau et de l'argile, le ratio massique eau/argile varie de 40/60 à 60/40.

Selon un mode de réalisation particulier, lorsque la composition A contient de l'eau et de la silice, l'eau est présente selon une teneur d'au moins 50% en masse par rapport à la masse totale de la composition.

De manière particulièrement préférée, la composition A comprend de l'eau et de l'argile.

Cette composition A particulière représente un avantage en termes de coût mais également en termes de facilité de mise en œuvre. En effet, cette composition A peut être facilement projetée sur la couche de liant géopolymère, augmentant ainsi les cadences de travail sur chantier.

Avantageusement, lorsque la composition A est choisie parmi une composition contenant de l'eau et au moins un composé choisi parmi l'argile et la silice, et une composition contenant de l'huile et éventuellement de l'argile, elle peut comprendre en outre des agents additionnels, en particulier différents des différents composés cités ci-avant.

Parmi lesdits agents additionnels, on peut citer à titre d'exemple des agents thixotropes tels que des minéraux, des synthétiques plastiques, des synthétiques organiques, etc.

De manière préférée, l'étape b) est réalisée par projection.

Selon un mode de réalisation particulier, les étapes a) et b) sont réalisées par projection.

Avantageusement, le procédé selon l'invention comprend en outre une étape c) d'application d'eau sur ladite couche de cure.

Au cours de cette étape c), la couche de cure peut ainsi être aspergée d'eau. L'application d'eau sur la couche de cure peut être répétée périodiquement. Par exemple, la couche de cure peut être aspergée d'eau toutes les 15 minutes, toutes les 30 minutes, toutes les 2 heures ou toutes les 12 heures.

Lors de ladite étape c), l'eau peut être appliquée à l'aide de tout moyen permettant de projeter de l'eau sur la couche de cure, par exemple à l'aide d'un brumisateur ou d'un pulvérisateur.

Grâce à cette application d'eau, la couche de cure peut alors agir en quelque sorte comme une éponge. En effet, elle est à même de garder l'eau, permettant ainsi de protéger le liant géopolymère plus longtemps.

Le procédé selon l'invention peut comprendre une étape d) d'élimination de ladite couche de cure.

Cette étape d) peut être réalisée à l'aide de tout moyen connu de l'homme du métier. Par exemple, la couche de cure peut être éliminée par un lavage sous-pression, notamment par karcher.

Cette étape d) peut permettre de rendre propre à l'utilisation la couche de liant géopolymère.

De manière préférée, le procédé selon l'invention comprend les étapes successives c) et d).

Les étapes c) et d) peuvent être particulièrement avantageuses lorsque la composition A comprend de l'eau et de l'argile. En effet, la couche de cure joue alors son rôle d'éponge de manière particulièrement efficace lorsqu'elle est aspergée d'eau. De plus, elle peut être éliminée facilement car son adhérence à la couche de liant géopolymère est faible.

Les exemples suivants servent à illustrer l'invention sans toutefois présenter un caractère limitatif.

### EXEMPLES

### Protocole de traitement d'une surface en béton

On réalise le traitement d'une surface de béton selon divers procédés.

5 procédés sont mis en œuvre (procédés 1 à 5). Dans ces 5 procédés, un même liant géopolymère est utilisé. Il s'agit d'un mélange de la solution silicatée K5020T, commercialisée par la société WOELLNER, d'hydroxyde de potassium et d'argile métakaolin.

Puis, 5 mortiers géopolymères sont préparés à partir dudit liant géopolymère. Chacun de ces 5 mortiers, dénommés mortiers 1 à 5 dans la suite, comprend classiquement en outre de l'eau, du laitier et des charges.

Le mortier 1, utilisé dans le procédé 1, a été renforcé de fibres de verre.

Le mortier 2, utilisé dans le procédé 2, a été renforcé de microfibres synthétiques.

Le mortier 3, utilisé dans le procédé 3, a été revêtu d'un produit de cure « MasterKure 82 WB », commercialisé par la société BASF. Il s'agit d'un produit de cure habituellement employé pour lutter contre le retrait hydraulique des matériaux à base de ciment.

Les mortiers 4 et 5 sont identiques et ont été renforcés de fibres de verre.

La surface en béton a été préparée avant application des mortiers géopolymère, c'est-à-dire que le béton a été au préalable poncé ou raboté ou sablé ou humidifié. Des gobetis géopolymériques peuvent être présents sur ladite surface en béton.

Dans les procédés 1 à 3, les mortiers 1 à 3 sont appliqués sur la surface en béton préparée. Dans chacun des procédés 1 à 3, une couche de liant géopolymère est donc obtenue.

Dans le quatrième procédé, le mortier 4 est appliqué sur la surface en béton préparée de manière à obtenir une couche de liant géopolymère. Puis, une composition A comprenant de l'eau et du métakaolin selon un ratio massique 54/46 est appliquée sur la couche de liant géopolymère, de manière à obtenir une couche de cure. L'échantillon obtenu est ensuite poncé.

Dans le cinquième procédé, le mortier 5 est appliqué sur la surface en béton préparée de manière à obtenir une couche de liant géopolymère. Puis, une composition A comprenant de l'huile et de la bentonite est appliquée sur la couche de liant géopolymère, de manière à obtenir une couche de cure. L'échantillon obtenu est ensuite poncé.

La composition A employée dans le procédé 5 est le produit « Khobra ML » commercialisé par la société SPPM.

Les 5 procédés sont ainsi résumés dans les tableaux 1 et 2 ci-dessous :

**[Tableau 1]**

| **Procédé** | **1** (comp) | **2** (comp) | **3** (comp) |
|---|---|---|---|
| Etape a) | Mortier 1 | Mortier 2 | Mortier 3 |
| Etape b) | - | - | - |

**[Tableau 2]**

| **Procédé** | **4** (inv) | **5** (inv) |
|---|---|---|
| Etape a) | Mortier 4 | Mortier 5 |
| Etape b) | Composition comprenant de l'eau et du métakaolin | Composition comprenant de l'huile et de la bentonite¹ |

1 : composition « Khobra ML » commercialisée par la société SPPM.

Ainsi, les procédés 1, 2 et 3 sont des procédés comparatifs. Les procédés 4 et 5 sont des procédés selon l'invention.

### Résultats

A l'issue de chacun des 5 procédés, des photographies sont prises de chacun des échantillons.

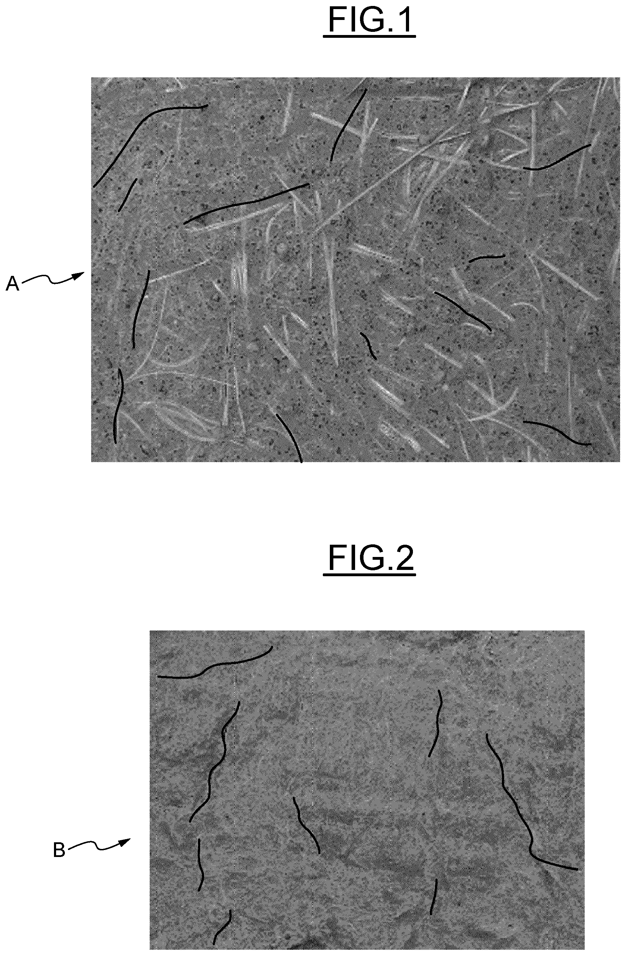

L'échantillon A est l'échantillon obtenu à l'issue du procédé 1 (Figure 1).

L'échantillon B est l'échantillon obtenu à l'issue du procédé 2 (Figure 2).

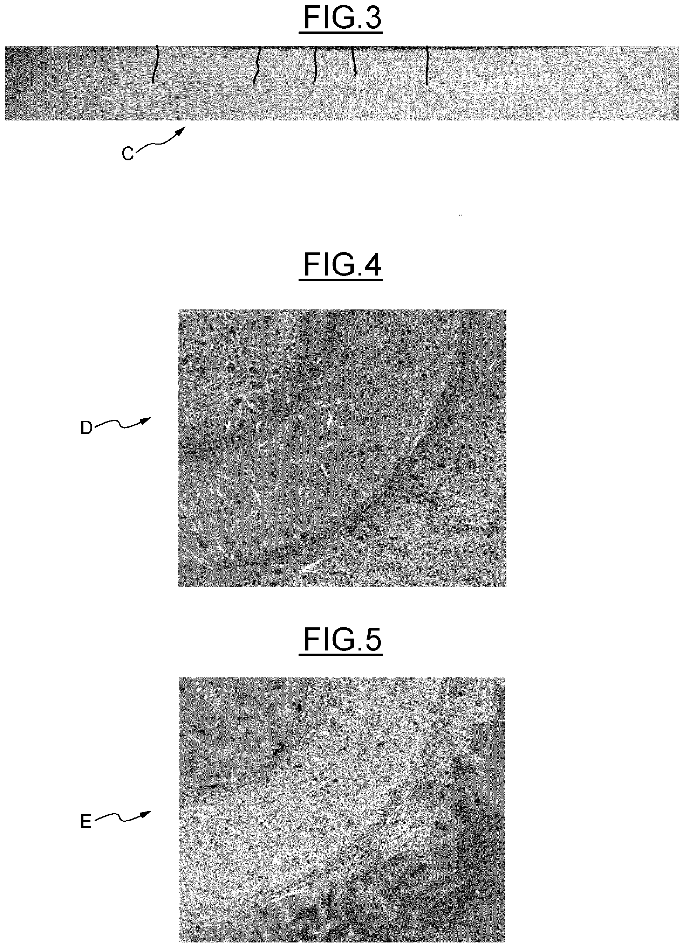

L'échantillon C est l'échantillon obtenu à l'issue du procédé 3 (Figure 3).

L'échantillon D est l'échantillon obtenu à l'issue du procédé 4 (Figure 4).

L'échantillon E est l'échantillon obtenu à l'issue du procédé 5 (Figure 5).

Comme on peut le voir sur les figures 1, 2 et 3, de nombreuses fissures peuvent être observées à la surface des échantillons A, B et C.

Ces renforcements à l'aide de fibres (fibres de verre ou microfibres) ou à l'aide de produit de cure sont des solutions utilisées habituellement pour contrer le retrait hydraulique rencontré dans les matériaux à base de ciment, notamment les ciments Portland.

Il est clairement constaté que ces solutions ne sont pas totalement satisfaisantes pour les liants géopolymères du fait de l'apparition de nombreuses fissures à la surface des échantillons A, B et C. En tout état de cause, ces solutions ne permettent pas de lutter de manière aussi efficace pour contrer le retrait hydraulique rencontré dans les liants géopolymères.

En revanche, comme on peut le voir sur les figures 4 et 5, la surface des échantillons D et E est lisse, sans trace de fissures.

Il peut être directement déduit de ces observations que le procédé selon l'invention permet de protéger le liant géopolymère, en luttant efficacement contre le retrait hydraulique.

La lutte contre le retrait hydraulique est donc plus efficace grâce au procédé selon l'invention que par les procédés de l'art antérieur.

## Revendications

1. Procédé de traitement d'une surface comprenant les étapes successives suivantes :
a) appliquer sur ladite surface au moins une composition comprenant au moins un liant géopolymère comprenant un ou plusieurs composés aluminosilicate et un ou plusieurs composés alcalins de manière à ce que la surface soit recouverte, au moins partiellement, de préférence totalement, d'une couche de liant géopolymère ;
b) appliquer sur la couche de liant géopolymère au moins une composition A choisie parmi :
- une composition contenant de l'eau et au moins un composé choisi parmi l'argile et la silice ;
- une composition contenant de l'huile et éventuellement de l'argile, de préférence une composition contenant de l'huile et de l'argile ; et
- une composition comprenant au moins un polymère,
de manière à ce que la couche de liant géopolymère soit recouverte, au moins partiellement, de préférence totalement, d'une couche de cure comprenant au moins la composition A.

2. Procédé selon la revendication 1, **caractérisé en ce que** le(s)dit(s) composé(s) aluminosilicate et le(s)dit(s) composé(s) alcalins sont selon des rapports molaires à l'état frais : Si/Al compris entre 0,5 et 5, de préférence entre 1 et 4, M/Al inférieur ou égal à 5, de préférence inférieur ou égal à 2, où M représente Na ou K, et H₂O/M₂O inférieur ou égal à 25, de préférence compris entre 8 et 20, où M représente Na ou K.

3. Procédé selon la revendication 1 ou 2, **caractérisé en ce que**, lorsque la composition A est choisie parmi une composition contenant de l'eau et au moins un composé choisi parmi l'argile et la silice et une composition comprenant au moins un polymère, elle se présente sous la forme d'un gel aqueux.

4. Procédé selon l'une quelconque des revendications précédentes, **caractérisé en ce que** la composition A est choisie parmi une composition contenant de l'eau et au moins un composé choisi parmi l'argile et la silice, et une composition contenant de l'huile et de l'argile.

5. Procédé selon l'une quelconque des revendications précédentes, **caractérisé en ce que** la silice est choisie parmi la silice pyrogénée.

6. Procédé selon l'une quelconque des revendications précédentes, **caractérisé en ce que** l'argile est choisie parmi la kaolinite, le métakaolin, la dickite, la nacrite, la halloysite, la montmorillonite, la bentonite, la vermiculite et leurs mélanges.

7. Procédé selon l'une quelconque des revendications précédentes, **caractérisé en ce que**, lorsque la composition A contient de l'eau et de l'argile, le ratio massique eau/argile varie de 40/60 à 60/40.

8. Procédé selon l'une quelconque des revendications précédentes, **caractérisé en ce que**, lorsque la composition A contient de l'eau et de la silice, l'eau est présente selon une teneur d'au moins 50% en masse par rapport à la masse totale de la composition.

9. Procédé selon l'une quelconque des revendications précédentes, **caractérisé en ce que** les étapes a) et b) sont réalisées par projection.

10. Procédé selon l'une quelconque des revendications précédentes, **caractérisé en ce qu'**il comprend en outre une étape c) d'application d'eau sur ladite couche de cure.

11. Procédé selon l'une quelconque des revendications précédentes, **caractérisé en ce qu'**il comprend une étape d) d'élimination de ladite couche de cure.
